# EUROPEAN PATENT APPLICATION

(11) **EP 4 140 313 A1**
(43) Date of publication of application: **01.03.2023**
(21) Application number: 21792711.0
(22) Date of filing: 31.03.2021
(51) Int. Cl.: A23L 2/00, A23L 2/38

(54) **MILK-COMPONENT-CONTAINING BEVERAGE**

(30) Priority: 20.04.2020 JP 2020074521
(71) Applicant: Suntory Holdings Limited, Osaka 530-8203 (JP)
(72) Inventor: OGI, Takahiro, Kawasaki-shi, Kanagawa 211-0067 (JP); ARAI, Nozomu, Kawasaki-shi, Kanagawa 211-0067 (JP)
(74) Representative: Vossius & Partner Patentanwälte Rechtsanwälte mbB
(86) International application number: PCT/JP2021/013885
(87) International publication number: WO 2021/215213

(57) **Abstract**

Provided is a beverage that contains a high concentration of a milk component, and has reduced unpleasant lingering sensation despite the low soluble coffee solids content and low soluble tea solids content thereof. The present invention is a containerized milk-component-containing beverage having a soluble coffee solids content of less than 0.3 g/100 mL, a soluble tea solids content of less than 0.1 g/100 mL, and a milk solids content of 1-16 g/100 mL, the beverage containing caffeine in an amount of 5-100 mg/100mL of the beverage.

## Description

### TECHNICAL FIELD

The present invention relates to a milk-component-containing beverage containing a high concentration of a milk component. More specifically, it relates to the milk-component-containing beverage containing a high concentration of the milk component, in which an unpleasant sluggish feeling peculiar to the milk component in high concentration is improved.

### BACKGROUND ART

In recent years, with growing health consciousness among consumers, a demand for taking protein efficiently has been increased. For recovery from fatigue, it needs to take carbohydrates and protein promptly. Milk derived from a mammal such as cow's milk, or dairy products using these are optimum for the recovery from the fatigue because these are rich in both nutrients. Particularly, the dairy products in a form of the beverage and the milk-component-containing beverage are strongly supported by the health-conscious consumers since they can easily and efficiently take nutrients.

In a process for producing a container-packed milk-component-containing beverage that can be preserved at normal temperature for a long time, high-temperature sterilization is performed either before or after filling of that in a container. It is known that this heat-treatment causes thermal denaturation of the milk component in the beverage, resulting in generation of a deteriorated smell (unpleasant smell and stuffy smell) peculiar to milk. Therefore, a variety of methods for suppressing the heated milk smell in the milk-component-containing beverage have been developed. Examples of the methods include a method for suppressing generation of the heated milk smell due to dimethyl sulfide and dimethyl disulfide generated by heating, by substituting dissolved oxygen in the cow's milk with inert nitrogen gas (PTL. 1), and a method for suppressing the generation of the heated milk smell in the milk beverage such as fruit milk and coffee milk, by adding α-glycosyl trehalose (PTL. 2).

### CITATION LIST

### PATENT LITERATURE

PTL. 1: Japanese Patent No. 3091752
PTL. 2: Japanese Patent Laid Open No. 2006-94856

### SUMMARY OF INVENTION

### TECHNICAL PROBLEM

In a case that a large amount of milk component is blended into a beverage for nutritional purposes, thickness feeling and richness of milk can be increased with a higher amount blended, but there has been a problem that deteriorated smell unique to the milk generated by heat treatment becomes so stronger as to be felt as an unpleasant sluggish feeling, leading to impair the quality of the beverage.

In a container-packed milk-component-containing beverage that is subjected to high-temperature sterilization, it is an object of the present invention to provide a beverage with a reduced unpleasant sluggish feeling in spite of containing a large amount of milk component.

### SOLUTION TO PROBLEM

The present inventors have intensively studied on a method for easily and efficiently reducing the unpleasant sluggish feeling generated by high-temperature sterilization without using a specialized equipment. As a result, surprisingly, the present inventors have found that a specific amount of caffeine can remarkably reduce the unpleasant sluggish feeling due to the milk deteriorated smell, and completed the present invention.

The present invention includes the following embodiments, but not limited to these.
[1] A container-packed milk-component-containing beverage
   satisfying the following i) and ii):
      i) a soluble coffee solid content in the beverage is less than 0.3 g/100 mL; and
      ii) a soluble tea solid content in the beverage is less than 0.1 g/100 mL; and
   comprising 1 to 16 g of a milk solid content per 100 mL of the beverage,
   wherein the beverage comprises 5 to 100 mg of caffeine per 100 mL of the beverage.
[2] The beverage according to [1], wherein the beverage is a heat-sterilized container-packed beverage.

### ADVANTAGEOUS EFFECTS OF INVENTION

According to the present invention, the high-quality container-packed beverage containing a high concentration of a milk component, in which an unpleasant sluggish feeling due to the milk deteriorated smell is reduced, can be produced.

### DESCRIPTION OF EMBODIMENTS

### (Milk-Component-Containing Beverage)

The present invention is, in one embodiment, a milk-component-containing beverage in which i) a soluble coffee solid content is less than 0.3 g/100 mL; ii) a soluble tea solid content is less than 0.1 g/100 mL; and a milk solid content is 1 to 16 g/100 mL, wherein the beverage contains caffeine in a concentration of 5 to 100 mg/100 mL. Here, the "milk solid content" in the present invention means a total amount of a non-fat milk solid content and a milkfat content, and the "milk-component-containing beverage" means the beverage containing the milk solid content. The milk solid content of the present invention is not limited as long as it is a milk component added for providing a milk flavor and a milk feeling to the beverage. Examples include milk, whole milk, skimmed milk, concentrated milk, skimmed concentrated milk, condensed milk, skimmed condensed milk, whole milk powder, skimmed milk powder, fresh cream, butter, butter oil, butter milk, butter milk powder, casein, whey, and cheese. The milk component that is an ingredient for the beverage according to the present invention may be one kind of milk component, or a mixture of two or more kinds of milk component.

The milk-component-containing beverage of the present invention contains a high concentration of the milk solid content, the concentration being 1 to 16 g per 100 mL of the beverage. The concentration of the milk solid content is preferably 2 to 15 g/100 mL, more preferably 3 to 15 g/100 mL, even more preferably 3 to 12 g/100 mL. The milk solid content can be determined by measuring a weight of a dried solid after removing water by drying the milk components using a general drying method (freeze drying, evaporating, etc.). For example, with respect to milk ingredients (milk components) listed in the label on a container of a container-packed beverage, the milk solid content of each ingredient is measured and a sum of them can be determined as the milk solid content in the beverage. Furthermore, for example, in a case that an ingredient containing protein or a lipid except for milk components is not blended in the beverage, it can be understood that a sum of the protein and the lipid in the beverage is understood as the milk solid content.

The milk-component-containing beverage of the present invention is a beverage with reduced sluggish feeling in beverage in spite of containing the milk component in high concentration. Here, the "sluggish feeling" in the present description means an unpleasant residual milk deteriorated smell (unpleasant smell and stuffy smell) felt after swallowing the beverage. It has been found that this sluggish feeling is difficult to perceive in the beverage having a coffee flavor such as a cafe au lait and the beverage having a tea flavor such as a milk tea. On the other hand, in addition to the above milk solid content, it has been found that the beverage meeting the following i) and ii) is prone to cause the problem (sluggish feeling) of the present invention:
i) the soluble coffee solid content in the beverage is less than 0.3 g/100 mL; and
ii) the soluble tea solid content in the beverage is less than 0.1 g/100 mL.
Therefore, the milk-component-containing beverage of the present invention is the beverage meeting the above i) and ii) as well as the above milk solid content which may normally cause the sluggish feeling, and the present invention reduces the sluggish feeling in the milk-component-containing beverage that may cause the sluggish feeling.

Here, the " soluble coffee solid content" means a weight of dried solids after removing water by drying a liquid containing coffee beans-derived components such as an extract liquid (including concentrates and dried ones) of roasted coffee beans using a general drying method (freeze drying, evaporating, etc.). It can be measured by obtaining a dry weight of the beverage by measuring a weight after drying a beverage sample at 105°C for 8 hours in an electric constant temperature dryer, and subtracting a dry weight of components other than the solid content derived from coffee from the measured value obtained. The soluble coffee solid content of the beverage of the present invention is less than 0.3 g/100 mL, preferably less than 0.2 g/100 mL, more preferably less than 0.1 g/100 mL, even more preferably less than 0.05 g/100 mL, particularly preferably less than 0.01 g/100 mL. Furthermore, the beverage of the present invention is preferably substantially free from coffee as the ingredient. In the container-packed beverage, in a case that there is no description of coffee or coffee beans in the ingredients described on the container, it can be interpreted that the beverage is substantially free from coffee as the ingredient. The coffee as the ingredient written in the present description does not include a caffeine refined product (e.g., 95% or more of caffeine content) derived from coffee which is described as "caffeine (extract).". The less the soluble coffee solid content in the milk-component-containing beverage is, the more prone to cause the problem (sluggish feeling) of the present invention is, but the present invention has an effect that the "sluggish feeling" can be reduced even in such beverages that are prone to cause the "sluggish feeling".

The " soluble tea solid content" means a weight of dried solids after removing water by drying a tea-leaf extract liquid (including concentrates and dried ones) of tea, oolong tea, etc. using a general drying method (freeze drying, evaporating, etc.). It can be measured by obtaining the dry weight of the beverage by measuring the weight after drying the beverage sample at 105°C for 8 hours in an electric constant temperature dryer, and subtracting the dry weight of components other than the solid contents derived from the tea leaf from the measured value obtained. The soluble tea solid content of the beverage of the present invention is less than 0.1 g/100 mL, preferably less than 0.05 g/100 mL, more preferably less than 0.01 g/100 mL, even more preferably less than 0.005 g/100 mL. Furthermore, the beverage of the present invention is preferably substantially free from the tea as the ingredient. In the container-packed beverage, in a case that there is no description of various tea or tea leaves in the ingredients described on the container, it can be interpreted that the beverage is substantially free from the tea as the ingredient. The tea as the ingredient written in the present description does not include a caffeine refined product (e.g., 95% or more of caffeine content) derived from tea which is described as "caffeine (extract)." The less the soluble tea solid content in the milk-component-containing beverage is, the more prone to cause the problem (sluggish feeling) of the present invention is, but the present invention has an effect that the "sluggish feeling" can be reduced even in such beverages that are prone to cause the "sluggish feeling".

Although the milk-component-containing beverage which is capable to be preserved at normal temperature for a long time generates the unpleasant sluggish feeling due to severe sterilization treatment, this sluggish feeling is effectively reduced in the beverage of the present invention. Therefore, for the container-packed beverage sterilized by heating (in the present description, also written as a "heat-sterilized container-packed beverage") which is capable to be preserved at normal temperature for a long time and generally prone to cause the sluggish feeling, the sluggish feeling is preferably reduced by applying the present invention. Here, the heat-sterilized container-packed beverage is a beverage which has been subjected to heat-sterilization treatment at 80°C or more (preferably 100°C or more, more preferably 110°C or more) and 160°C or less (preferably 150°C or less) for 0.01 minutes or more (preferably 0.03 minutes or more) and 60 minutes or less (preferably 30 minutes or less). A method for the heat-sterilization treatment can be appropriately selected depending on the container. When a heat resistant container (a metal can, a glass, etc.) is used, retort-sterilization may be performed. When a non-heat resistant container (a polyethylene terephthalate bottle, a paper container, etc.) is used, a prepared liquid is sterilized at a high temperature for a short time by using a plate type heat exchanger, etc., and after cooling it to a certain temperature, it can be filled in the container. From a point of view of remarkability of effects, particularly the retort sterilized beverage in a can is a preferable embodiment.

### (Caffeine)

In the milk-component-containing beverage according to the present invention, the sluggish feeling of the beverage containing the milk components in high concentration can be reduced by containing caffeine. The caffeine used in the present invention is not limited, but preferably a purified product of caffeine (caffeine content of 95% or more, more preferably 98% or more) which is commercially available as a food additive. The caffeine may be a hydrate or an anhydride. As a caffeine source to be contained in the milk-component-containing beverage of the present invention, use of an extract of coffee beans (caffeine content of less than 95%) and use of an extract of tea leaves (caffeine content of less than 95%) in place of the purified product of the caffeine are not preferable embodiments, since it becomes difficult to keep the concentrations of the soluble coffee solid content and the soluble tea solid content low.

An effect of the present invention on reduction of the sluggish feeling is enhanced with the caffeine content. The content of the caffeine in the beverage of the present invention is 5 mg or more per 100 mL of the beverage, preferably 10 mg/100 mL or more, more preferably 15 mg/100 mL or more. On the other hand, when the caffeine content is too high, the caffeine is perceived as a bitter taste and sometimes influences an flavor of the beverage, and thus the caffeine content is preferably 100 mg/100 mL or less, more preferably 80 mg/100 mL or less, even more preferably 50 mg/100 mL or less. The content of the caffeine in the beverage can be measured by using, e.g., high performance liquid chromatography.

The present inventors have found that when caffeine and a non-fat milk solid content are coexisted, a bad aftertaste due to the bitter taste of the caffeine sometimes occurs. To reduce the bad aftertaste due to the bitter taste of caffeine, the caffeine content is preferably adjusted so that a ratio of a weight of caffeine (unit: mg) to a weight of a non-fat milk solid content (unit: g) (caffeine content [mg]/non-fat milk solid content [g]) is 25 or less of. The ratio of the caffeine to the non-fat milk solid content is more preferably 13 or less, even more preferably 10 or less. The non-fat milk solid content can be determined by subtracting a milkfat content from a milk solid content.

### (Other Components)

The beverage of the present invention is a beverage in which sluggish feeling in a beverage containing a milk solid content in high concentration is reduced. Since the sluggish feeling of the beverage is notably perceived in a beverage particularly containing a lipid, it is preferable that the present invention is applied to a beverage containing a certain amount of a lipid to reduce the sluggish feeling in the beverage of which sluggish feeling can be normally notably perceived. A component to be the ingredient of the lipid includes edible fat and oil in addition to the above milkfat content. The beverage according to the present invention contains preferably 0.2 to 5.0 g of the lipid per 100 mL of the beverage, more preferably 0.3 to 4.0 g of the lipid, particularly preferably 0.5 to 3.5 of the lipid. The milk-component-containing beverage containing these range of a lipid is normally in a state that the sluggish feeling is enhanced and prone to be perceived, but the sluggish feeling can be reduced by applying the present invention.

Preferably, the beverage of the present invention further contains sweet components. The sweet components demonstrate effects reducing the sluggish feeling by additively acting with the caffeine. Here, the sweet components are components having sweetness, and means saccharides, sugar alcohols, and sweeteners. Specifically, examples of the sweet components include saccharides having sweetness such as sugar, fructose, dextrose, maltose, galactose, mannose, fucose, xylose, trehalose, and lactose; sugar alcohols such as erythritol, xylitol, maltitol, sorbitol, mannitol, and inositol; and various sweeteners such as sucralose, aspartame, acesulfame potassium, neotame, and a stevia extract. Above all, the sugar is preferably contained.

The beverage of the present invention may be an embodiment in which an emulsifier is contained. The beverage to which the emulsifier is added is sometimes notably perceived the sluggish feeling combined with the milk solid content in high concentration. By applying the present invention to a beverage containing an emulsifier, the sluggish feeling due to the emulsifier can be also reduced. As the emulsifier, a known emulsifier such as sucrose fatty acid esters, glycerine fatty acid esters, lecithin, lysolecithin, sorbitan fatty acid esters, and polyglycerine fatty acid esters can be used. Above all, the sucrose fatty acid esters can be preferably selected.

The beverage of the present invention contains the milk solid content in high concentration. When a pH is in an acid region, casein which is a main protein in a milk is coagulated and precipitated. Therefore, to suppress the coagulation and the precipitation, the pH (20°C) of the beverage according to the present invention is preferably 5.0 to 8.0, more preferably 5.5 to 8.0, more preferably 5.8 to 7.5. To set the pH in this range, an acidifier is preferably not added.

In addition to these components, a flavoring, a pH adjuster, an antioxidant, etc. can be added to the extent that effects of the present invention are not affected. The type of the flavoring is not limited, but flavorings increasing an aroma of the milk components such as a milk flavoring, and a butter flavoring can be preferably selected.

### EXAMPLES

Hereinafter, details of the present invention will be described in more specifically with reference to experimental examples, but the present invention is not limited to these examples. Furthermore, in the present description, a numerical range includes its endpoints as long as it is not particularly described.

### Experiment 1: Reducing Action of Sluggish Feeling by Caffeine

To 45% by weight of cow's milk, 2.5% by weight of a skimmed milk powder, 5.0% by weight of sugar, 0.2% by weight of a sucrose fatty acid ester (RYOTO^{R} Sugar Ester P-1670, produced by Mitsubishi-Chemical Foods Corporation), 0.2% by weight of a milk flavoring, caffeine (purity 99%) of amounts shown in table 1, and an appropriate amount of water were added, blended and dissolved, and further water was added to a total amount of 100% by weight. This liquid was heated to 65°C, and after homogenizing it at a pressure of 20 MPa by using a high-pressure homogenizer, it was filled in a can container, and subjected to retort-sterilization at 121°C for 30 minutes, to prepare a canned milk beverage. The pH (20°C) of the beverages after the sterilization was 6.4 to 6.5. Furthermore, per 100 mL of the milk beverage, the milkfat content was 1.6 g, the non-fat milk solid content was 5.9 g, and the milk solid content was 7.5 g. The soluble coffee solid content and the soluble tea solid content in the beverage were 0 g/100 mL.

The canned milk beverage obtained was opened after cooling to 5°C, and four expert panelists performed sensory evaluation by drinking 30 mL each. First, the panelists drank control (sample 1-1) in advance, discussed the flavor in control among the panelists and shared a common view about the "sluggish feeling" in control (residual milk deteriorated smell (unpleasant smell and stuffy smell) felt after swallowing the beverage). After that, the "sluggish feeling" of each sample was evaluated by each panelist based on the following evaluation criteria, with control as 4 points. The average point was adopted.

### <Evaluation Criteria (Sluggish Feeling)>

7: Feels very much stronger than control,
6: Feels much stronger than control,
5: Feels slightly stronger than control,
4: Equivalent to control,
3: Feels slightly weaker than control,
2: Feels much weaker than control, and
1: Feels very much weaker than control.

The evaluation results are shown in table 1. With an increase of the content of the caffeine, the sluggish feeling was reduced. When the caffeine was 100 mg/100 mL or more, since there was a panelist who evaluated that the bitter taste of the caffeine lingered in the aftertaste and tended to have less aftertaste sharpness, it was suggested that an upper limit value of the caffeine was preferably about 100 mg/100 mL.

**[Table 1]**

| | Sample 1-1 (Control) | Sample 1-2 | Sample 1-3 | Sample 1-4 | Sample 1-5 | Sample 1-6 | Sample 1-7 |
|---|---|---|---|---|---|---|---|
| Caffeine (mg/100 mL) | 0 | 1 | 5 | 10 | 50 | 100 | 200 |
| Milkfat Content (g/100 mL) | 1.6 | | | | | | |
| Non-Fat Milk Solid Content (g/100 mL) | 5.9 | | | | | | |
| Milk Solid Content (g/100 mL) | 7.5 | | | | | | |
| Caffeine (mg)/Non-Fat Milk Solid Content (g) | 0.0 | 0.2 | 0.8 | 1.7 | 8.5 | 16.9 | 33.9 |
| Evaluation Results (Point) [Sluggish Feeling] | 4.0 | 3.8 | 3.5 | 3.1 | 2.2 | 2.1 | 1.8 |

### Experiment 2: Influence of Milkfat Content

14% by weight of cow's milk, 8.0% by weight of a skimmed milk powder, 0 to 100 mg/100 mL of caffeine, and water were added to a total amount of 100% by weight. Using this liquid (0.5 g of a milkfat content, 8.5 g of a non-fat milk solid content, and 9.0 g of a milk solid content, per 100 mL), canned milk beverages (samples 2-1 to 2-6) were prepared in the same manner as in experiment 1. Furthermore, , canned milk beverages (samples 2-7 to 2-12) were prepared in the same manner except that the amounts of the cow's milk and the skimmed milk powder were respectively changed to 42% by weight and 5.5% by weight (1.5 g of a milkfat content, 8.5 g of a non-fat milk solid content, and 10.0 g of a milk solid content, per 100 mL). Furthermore, canned milk beverages (samples 2-13 to 2-18) were prepared in the same manner except that the amounts of the cow's milk and the skimmed milk powder were respectively changed to 96% by weight and 0.9% by weight (3.5 g of a milkfat content, 8.5 g of a non-fat milk solid content, and 12.0 g of a milk solid content, per 100 mL). The pH of the beverages after the sterilization (20°C) was 6.3 to 6.4.

The sluggish feeling of the canned milk beverages was evaluated in the same manner as in experiment 1, with sample 2-1 being regarded as control in samples 2-1 to 2-6, sample 2-7 being regarded as control in samples 2-7 to 2-12, and sample 2-13 being regarded as control in samples 2-13 to 2-18. Furthermore, the aftertaste sharpness and flavor favorability were also evaluated. The aftertaste sharpness was evaluated on difficulty of lingering of these unpleasant aftertastes from both aspects of the sluggish feeling of the milk and the bitter taste of the caffeine.

### <Evaluation Criteria (Aftertaste Sharpness)>

7: Very much better aftertaste sharpness than control,
6: Much better aftertaste sharpness than control,
5: Slightly better aftertaste sharpness than control,
4: Equivalent to control,
3: Slightly worse aftertaste sharpness than control,
2: Much worse aftertaste sharpness than control, and
1: Very much worse aftertaste sharpness than control.

### <Evaluation Criteria (Flavor Favorability)>

7: Very much more favorable than control,
6: Much more favorable than control,
5: Slightly more favorable than control,
4: Equivalent to control,
3: Slightly less favorable than control,
2: Much less favorable than control, and
1: Very much less favorable than control.

Results are shown in tables 2 and 3. Without regard to the amounts of the milkfat content and the milk solid content, the sluggish feeling was reduced with the increase of the caffeine content. When the caffeine content was around 80 mg/100 mL, the bitter taste of the caffeine becomes to linger in the aftertaste, and the evaluation points of the aftertaste sharpness and the flavor favorability were reduced compared with the case of the caffeine content of 50 mg/100 mL. When the caffeine content was 100 mg/100 mL, the aftertaste sharpness and the flavor favorability became lower than control.

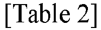

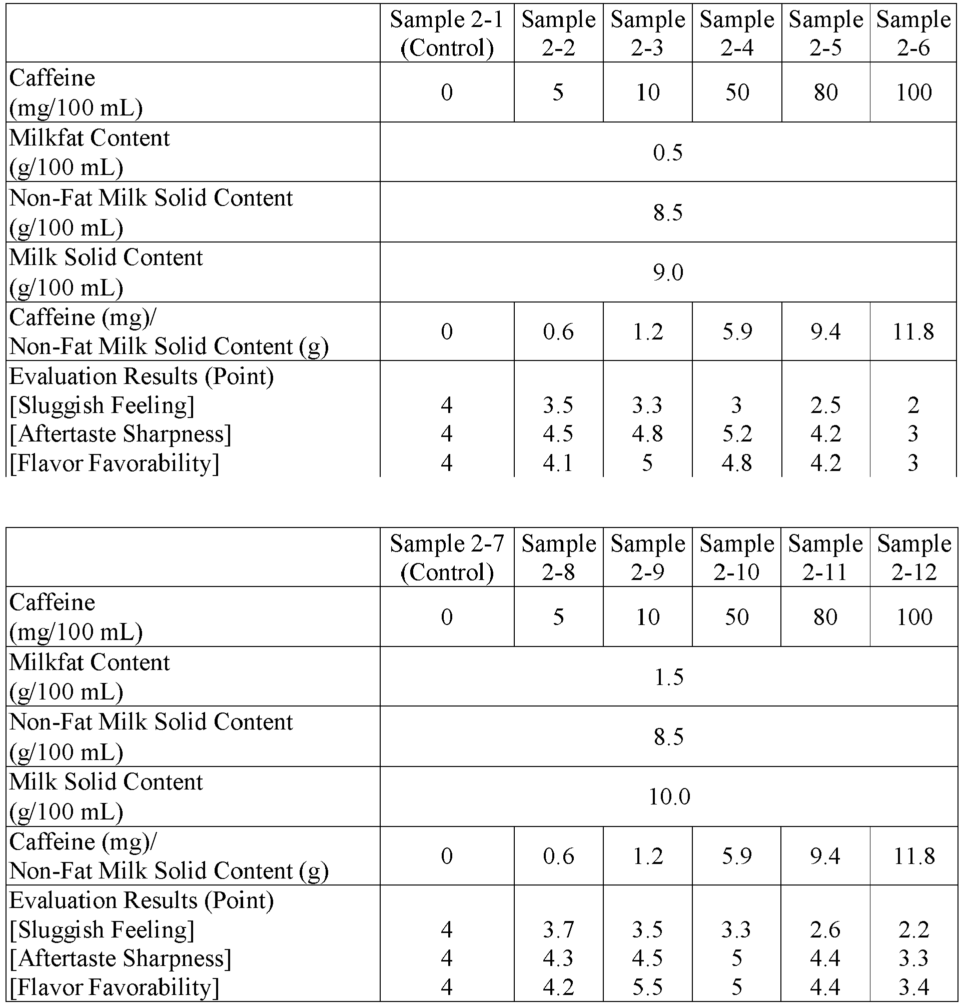

**[Table 3]**

| | Sample 2-13 (Control) | Sample 2-14 | Sample 2-15 | Sample 2-16 | Sample 2-17 | Sample 2-18 |
|---|---|---|---|---|---|---|
| Caffeine (mg/100 mL) | 0 | 5 | 10 | 50 | 80 | 100 |
| Milkfat Content (g/100 mL) | 3.5 | | | | | |
| Non-Fat Milk Solid Content (g/100 mL) | 8.5 | | | | | |
| Milk Solid Content (g/100 mL) | 12.0 | | | | | |
| Caffeine (mg)/ Non-Fat Milk Solid Content (g) | 0 | 0.6 | 1.2 | 5.9 | 9.4 | 11.8 |
| Evaluation Results (Point) | | | | | | |
| [Sluggish Feeling] | 4 | 3.9 | 3.6 | 3.4 | 2.8 | 2.5 |
| [Aftertaste Sharpness] | 4 | 4.2 | 4.3 | 4.8 | 4.5 | 3.5 |
| [Flavor Favorability] | 4 | 4.2 | 5.8 | 5.2 | 4.6 | 3.8 |

### Experiment 3: Influence of Non-Fat Milk Solid Content

1 to 16% by weight of a skimmed milk powder, 0 to 100 mg/mL of caffeine, and water were added to a total amount of 100% by weight. Using this liquid, canned milk beverages were prepared in the same manner as in experiment 1. The pH of the beverages after the sterilization (20°C) was 6.3 to 6.4. The sluggish feeling, the aftertaste sharpness, and the flavor favorability of the canned milk beverages obtained were evaluated in the same manner as in experiment 2,withsample 3-1 being regarded as control in samples 3-1 to 3-7 (milk solid content: 1 g/100 mL), sample 3-8 being regarded as control in samples 3-8 to 3-14 (milk solid content: 2 g/100 mL), sample 3-15 being regarded as control in samples 3-15 to 3-21 (milk solid content: 4 g/100 mL), sample 3-22 being regarded as control in samples 3-22 to 3-28 (milk solid content: 8 g/100 mL), and sample 3-29 being regarded as control in samples 3-29 to 3-35 (milk solid content: 16 g/100 mL).

Results are shown in tables 4 to 6. Without regard to the amounts of the non-fat milk solid content and the milk solid content, the sluggish feeling was reduced with the increase of the caffeine content. Furthermore, it was evaluated that the beverages, of which the ratio of the caffeine to the non-fat milk solid content (caffeine content [mg]/non-fat milk solid content [g]) is 25 or less, had the reduced sluggish feeling as well as the good aftertaste sharpness and the flavor favorability.

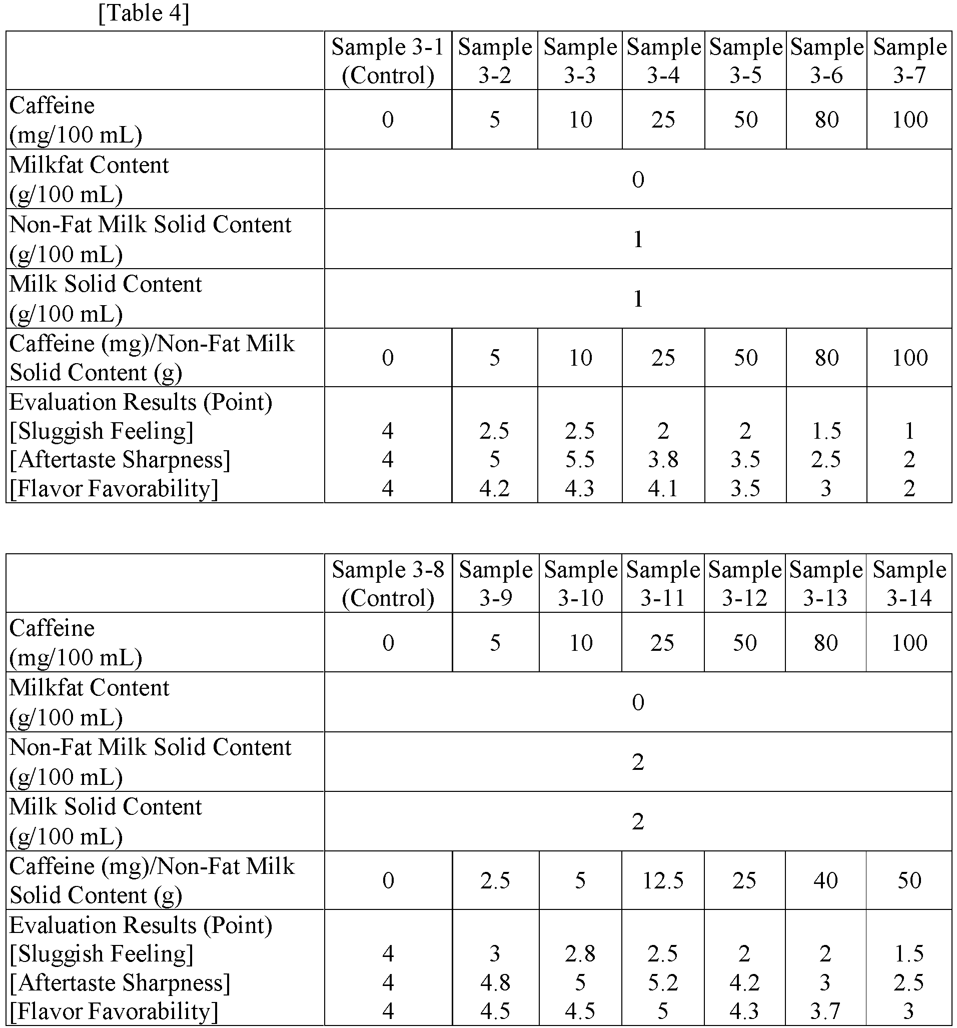

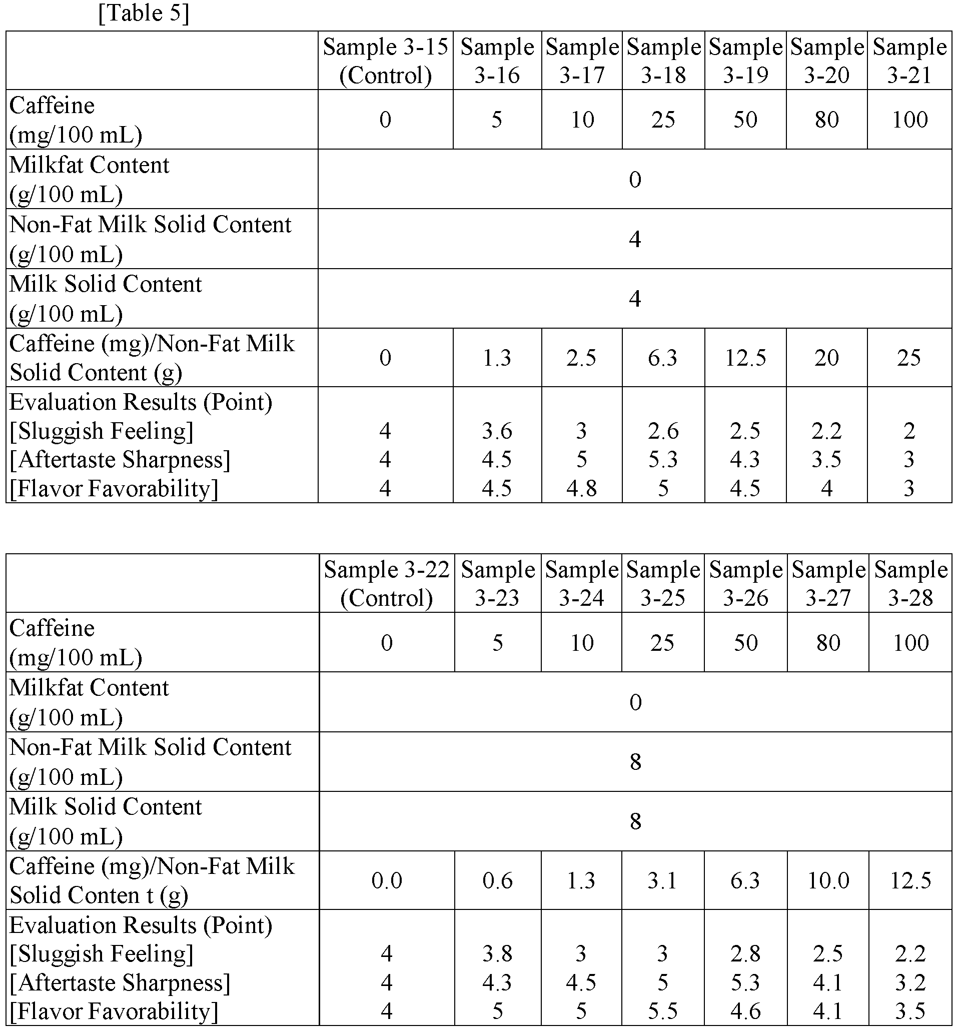

**[Table 6]**

| | Sample 3-29 (Control) | Sample 3-30 | Sample 3-31 | Sample 3-32 | Sample 3-33 | Sample 3-34 | Sample 3-35 |
|---|---|---|---|---|---|---|---|
| Caffeine (mg/100 mL) | 0 | 5 | 10 | 25 | 50 | 80 | 100 |
| Milkfat Content (g/100 mL) | 0 | | | | | | |
| Non-Fat Milk Solid Content (g/100 mL) | 16 | | | | | | |
| Milk Solid Content (g/100 mL) | 16 | | | | | | |
| Caffeine (mg)/Non-Fat Milk Solid Content (g) | 0.0 | 0.3 | 0.6 | 1.6 | 3.1 | 5.0 | 6.3 |
| Evaluation Results (Point) | | | | | | | |
| [Sluggish Feeling] | 4 | 3.8 | 3.5 | 3.4 | 3.3 | 3 | 2.5 |
| [Aftertaste Sharpness] | 4 | 4.2 | 4.3 | 4.8 | 5.4 | 4.4 | 3.5 |
| [Flavor Favorability] | 4 | 5 | 5 | 5.5 | 4.6 | 4.3 | 3.5 |

## Claims

1. A container-packed milk-component-containing beverage
satisfying the following i) and ii):
i) a soluble coffee solid content in the beverage is less than 0.3 g/100 mL; and
ii) a soluble tea solid content in the beverage is less than 0.1 g/100 mL; and
comprising 1 to 16 g of a milk solid content per 100 mL of the beverage,
wherein the beverage comprises 5 to 100 mg of caffeine per 100 mL of the beverage.

2. The beverage according to claim 1, wherein the beverage is a heat-sterilized container-packed beverage.
